# DEMANDE DE BREVET EUROPEEN

(11) **EP 3 838 062 A1**
(43) Date de publication de la demande: **23.06.2021**
(21) Numéro de dépôt: 20191380.3
(22) Date de dépôt: 17.08.2020
(51) Int. Cl.: A45F 3/04, A45F 3/02, A45C 11/20, A45C 15/00, A45C 15/06, A45C 13/02, A45C 13/42, G06K 19/07, A45F 3/00

(54) **SAC CONNECTÉ DE TRANSPORT D'OBJETS FRAGILES**

(30) Priorité: 19.12.2019 FR 1914974
(71) Demandeur: Bensaoud, Afida, 94430 Chennevières-sur-Marne (FR); Richard, Xavier, 94430 Chennevières-sur-Marne (FR)
(72) Inventeur: Bensaoud, Afida, 94430 Chennevières-sur-Marne (FR); Richard, Xavier, 94430 Chennevières-sur-Marne (FR)
(74) Mandataire: Gauchet, Fabien Roland

(57) **Abrégé**

L'invention concerne un sac de transport d'objets fragiles comprenant une enveloppe externe rigide ou semi-rigide délimitant un volume interne, des éléments de cloisonnement (2) dudit volume interne, des moyens d'ouverture de l'enveloppe pour l'accès au volume interne, des moyens de liaison avec un porteur. Selon l'invention le sac comprend en outre un dispositif de sécurité agencé de sorte à coopérer avec les moyens d'ouverture.

## Description

### DOMAINE TECHNIQUE DE L'INVENTION

L'invention se rapporte au domaine des sacs de transport d'objets fragiles, à porter par un homme. Les sacs à dos sont plus particulièrement visés par l'invention et notamment mais non exclusivement les sacs à dos pour le transport alimentaire. Les sacs de transport dans le domaine médical, tels que les sacs pour secouristes entrent dans le cadre de l'invention.

### ETAT DE LA TECHNIQUE ANTERIEURE

On connait des sacs à dos pour le transport de produits alimentaires frais qu'il s'agit de transporter depuis leur lieu de fabrication jusque chez des particuliers qui les ont commandés. Les coursiers qui transportent ces produits frais doivent le faire en un temps minimal afin que les produits soient délivrés en bon état de conservation, aux acheteurs. Les sacs à dos connus sont généralement de forme cubique ou parallélépipédique ; leur enveloppe externe est rigide ou semi rigide, généralement imperméable ; des éléments de cloisonnement sont prévus à l'intérieur du volume délimité par l'enveloppe externe, afin de définir des volumes séparés par exemple pour plusieurs types d'aliments : chauds, froids, plus ou moins volumineux, plus ou moins mous, souples ou rigides. En ce sens ce sont des produits fragiles qu'il s'agit de transporter de la façon la plus délicate possible malgré les aléas du type de transport. Les éléments de cloisonnement peuvent être des tablettes rigides munies de rubans de type velcro qui en dépassent et qui permettent de les fixer de manière amovible sur les parois internes de l'enveloppe, plus précisément sur des bandes de type velcro fixées aux parois intérieures. On connait par le document US 2016 0316877 un sac de transport d'objets comprenant des éléments de cloisonnement agencés en son volume interne afin de partager ce volume.

Alors qu'il transporte sur son dos les produits à livrer, le coursier peut utiliser un vélo ou une moto pendant un temps plus ou moins long : de quelques minutes à une demi-heure par exemple.

Concernant les secouristes, ils peuvent avoir à parcourir à pieds de longues distances avec leur sac fixé sur leurs épaules ; le poids, la sécurité sont ainsi des paramètres déterminants pour ce type d'application.

Ainsi les sacs connus remplissent des fonctions importantes pour la qualité du transport et/ou le confort du coursier ou du secouriste - porteur.

Les sacs connus comprennent aussi des moyens d'ouverture de l'enveloppe externe, sur au moins une des faces de l'enveloppe. Des portions de face sont donc découpées et munies de moyens de fermeture de type fermeture Eclair® afin de constituer des moyens d'ouverture amovible de l'enveloppe externe, pour l'accès au volume interne de l'enveloppe. Bien entendu des moyens de liaison avec le porteur, tels que des sangles permettent la fixation du sac sur le dos du porteur.

En outre les sacs à dos connus peuvent être pliants afin, une fois déchargés, de pouvoir être pliés. Le brevet US 0 060 581B1 décrit un sac de pique-nique pliable. De même le document US 5 316 388 A divulgue un sac de transport pliable.

Concernant les éléments de séparation des volumes intérieurs des sacs de transport d'aliments, le brevet US 9 498 036 B1 divulgue un tel élément flexible et dont la température peut être contrôlée. Dans le même domaine, le brevet US 6 947 664 B1 mentionne un sac portable de pique-nique dont les aliments dans le volume intérieur peuvent être maintenus à une température constante. Concernant le chauffage de tels sacs, on connait la demande WO 2000 050307 A2 qui décrit un conteneur de transport d'aliments dont les parois intègrent des résistances chauffantes aptes à chauffer les aliments. Il est encore connu un sac dit de pique-nique permettant de refroidir les aliments contenus à l'intérieur.

On le constate, des fonctions multiples et variées sont prévues, corrélées aux sacs connus de transport d'aliments.

Cependant on cherche à améliorer de tels sacs notamment en matière de traçabilité, de sécurité à la fois des produits ou objets transportés, et du porteur. Les objets ou produits fragiles sont particulièrement concernés par l'invention. On entend par 'fragile' tout objet, produit, voire animal ou bébé qu'il s'agit de transporter d'une façon particulière dans des conditions de température, de pression, ..., précises et contrôlées. Un suivi et/ou une traçabilité sont en outre recherchées.

### EXPOSE DE L'INVENTION

L'invention vise à remédier aux inconvénients de l'état de la technique et notamment à proposer un sac de transport de produits fragiles, apte notamment à fournir un suivi, une traçabilité et une sécurité des produits transportés et/ou du porteur. Le transport de denrées périssables est notamment visé par l'invention.

Pour ce faire est proposé selon un premier aspect de l'invention un sac de transport d'objets fragiles comprenant une enveloppe externe rigide ou semi-rigide délimitant un volume interne, des éléments de cloisonnement dudit volume interne, des moyens d'ouverture de l'enveloppe pour l'accès au volume interne, des moyens de liaison avec un porteur. Conformément à l'invention, le sac comprend en outre des moyens de liaison connectique aptes à localiser ledit sac et/ou ledit porteur et /ou à délivrer en temps réel des informations sur les objets transportés ; une source d'énergie autonome de type batterie est prévue, reliée à au moins une prise de type jack-USB.

Il s'agit ici de prévoir un sac de transport de produits fragiles qui soit 'intelligent' c'est-à-dire doté de fonctions non encore prévues par l'art antérieur et qui permettent avantageusement les objectifs décrits ci-avant.

De façon particulière, le sac de transport comprend en outre des moyens de sécurisation du porteur tels que des sources lumineuses, des air-bags. Il s'agit par exemple de prévoir un signal lumineux sur la surface extérieure du sac, apte à indiquer le changement de direction de déplacement du porteur, notamment du cycliste ou motocycliste porteur. Les dispositifs de type air-bag sont préférentiellement placés sur les bretelles du sac, entre le sac et le porteur à des fins de sécurité.

De préférence, le sac de transport peut comprendre une carte magnétique pour identifier le porteur et/ou le sac via une application implantée dans un moyen de communication extérieur de type téléphone mobile, pour mémoriser et/ou transmettre des informations en temps réel. Encore une fois, la sécurisation et la traçabilité du porteur et/ou du sac sont ici améliorées grâce à cette caractéristique.

De façon plus précise, les informations sur les objets transportés concernent leur poids et/ou leur température et/ou l'hygrométrie du volume intérieur du sac. Pour ce faire, on prévoit au moins un capteur de poids et/ou au moins un capteur de température et/ou au moins un capteur d'humidité du volume intérieur du sac, reliés fonctionnellement à un moyen de traitement extérieur au sac et/ou à ladite carte magnétique.

Selon une autre caractéristique, le sac de transport comprend en outre des moyens pour chauffer ou refroidir ledit volume interne, alimentés par la source d'énergie. Lesdits moyens peuvent avantageusement être contrôlés in situ ou à distance.

En outre, le sac selon l'invention comprend des moyens d'affichage fixés sur la surface extérieure de l'enveloppe, alimentés ou non par la source d'énergie.

Sans sortir du cadre de l'invention, le sac comprend en outre des moyens de diffusion du son alimentés par la source d'énergie et aptes à coopérer avec des fichiers numériques transmis depuis au moins une source extérieure.

De façon intéressante, le sac de transport comprend en outre au moins une caméra et au moins une LED coopérant avec le moyen d'ouverture de l'enveloppe et des moyens de connectique afin de contrôler, et/ou d'enregistrer les déplacements dudit moyens d'ouverture. Un contrôle et donc une traçabilité sont ainsi possible ; tout vol ou effraction du produit présent à l'intérieur du sac peut ici être vérifié et/ou empêché.

Par ailleurs, le sac selon l'invention peut comprendre au moins une caméra fixée sur l'enveloppe extérieure, alimentée par ladite source d'énergie et apte à enregistrer, et/ou transmettre des informations relatives à l'environnement dudit sac en temps réel.

### BREVE DESCRIPTION DES FIGURES

D'autres caractéristiques et avantages de l'invention ressortiront à la lecture de la description qui suit, en référence aux figures annexées, qui illustrent :
[Fig.1] une vue de face d'un sac connecté selon un premier mode de réalisation de l'invention ;
[Fig.2] une vue de derrière d'un sac connecté selon le premier mode de réalisation de l'invention ;
[Fig.3] une vue de côté d'un sac connecté selon le premier mode de réalisation de l'invention ;
[Fig.4] une vue de face d'un sac connecté selon un deuxième mode de réalisation de l'invention ;
[Fig.5] une vue de derrière d'un sac selon le deuxième mode de réalisation de l'invention ;
[Fig.6] un schéma d'une caractéristique d'un sac connecté selon l'invention ;
[Fig.7] des schémas d'un sac selon l'invention vu de face, et d'autres caractéristiques ;
[Fig.8] une vue de face d'un sac connecté selon un autre mode de réalisation de l'invention ;
[Fig.9] une vue de côté d'un sac connecté selon encore un autre mode de réalisation de l'invention ;
[Fig.10] une vue d'un sac selon un autre encore mode de réalisation de l'invention ;
[Fig.11] une vue en trois dimensions d'un sac selon un autre encore mode de réalisation ;
[Fig.12] est une vue en trois dimensions de détail d'une face interne d'un dispositif de sécurité du sac de la figure 11 ;
[Fig.13] est une vue de la face interne du dispositif de sécurité de la figure 12 ; et,
[Fig.14] est une vue de la face externe du dispositif de sécurité de la figure 12.

Pour plus de clarté, les éléments identiques ou similaires sont repérés par des signes de référence identiques sur l'ensemble des figures.

### DESCRIPTION DETAILLEE D'UN MODE DE REALISATION

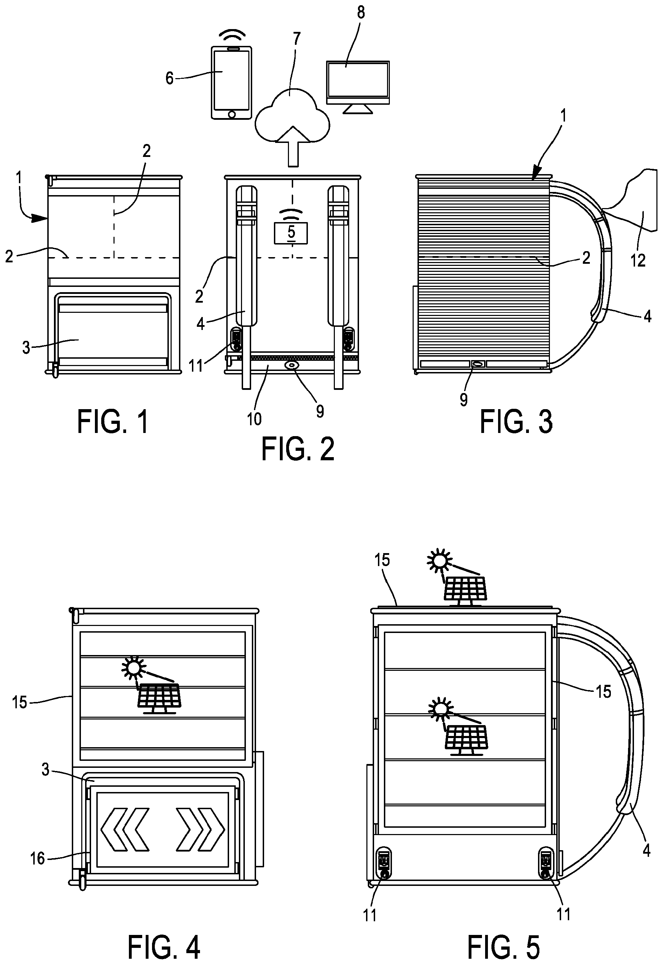

La figure 1 montre de façon schématique un premier mode de réalisation de l'invention ; on voit que le sac connecté de transport d'objets fragiles comprend une enveloppe externe 1 rigide ou semi rigide afin, ici, de présenter une forme extérieure parallélépipédique. D'autres formes extérieures sont envisageables dans le cadre de l'invention. Le volume interne délimité par l'enveloppe 1 peut comporter des éléments de cloisonnement 2, selon les besoins. On illustre ici un élément de cloisonnement 2 horizontal et un élément de cloisonnement vertical.

La figure 1 montre en outre des moyens d'ouverture 3 de l'enveloppe 1, pour l'accès au volume interne. Ces moyens d'ouverture peuvent par exemple se présenter sous la forme d'une partie de la face avant du sac, découpée afin de former un volet rectangulaire relié de façon permanente au sac par sa longueur inférieure (proche du bas du sac) et de façon amovible par une fermeture de type fermeture Eclair®. Cet exemple est illustratif. Une deuxième ouverture de même type peut être prévue sur la face supérieure du sac afin de la découvrir partiellement ou totalement.

La figure 2 montre en outre des moyens de liaison 4 avec le porteur du sac, sous forme de deux bretelles. Sur la figure 2 on voit par ailleurs des moyens de liaison connectique aptes à localiser le sac ; ces moyens correspondent ici à une carte magnétique 5 connectée au réseau qui permet notamment d'identifier le porteur via une application implantée sur un appareil de type smartphone 6, de transmettre et/ou de mémoriser des données à un 'cloud' donné 7, de fournir des informations en temps réel à un moyen de réception particulier 8. Par 'cloud' ou 'nuage' ou 'nuage informatique', on entend un ensemble de matériels, raccordements réseau et logiciels qui fournissent des services exploitables par quiconque dans le monde, à volonté.

Par ailleurs une source d'énergie autonome de type batterie 9 peut être insérée par exemple dans un volume de la partie basse du sac. Ce volume consiste en une poche fermée de façon amovible, par exemple par une fermeture Eclair® ou tout moyen équivalent. La batterie 9 peut être rechargée via une connexion appropriée (non représentée) à une prise électrique. Selon un aspect particulier de l'invention, la batterie 9 est reliée à des moyens interactifs par des prises de type jack-USB 11 fixés sur l'enveloppe du sac et préférentiellement recouvertes par des pattes souples afin de les protéger notamment de l'humidité.

En outre comme visible sur la figure 3, un moyen 12 de protection contre les chocs, de type airbag, peut être fixé par exemple au niveau des bretelles 4.

Les figures 4 et 5 montrent un autre mode de réalisation de l'invention selon lequel au moins un panneau solaire 15 est fixé sur l'une au moins des faces extérieures du sac. La figure 4 montre un panneau solaire 15 fixé sur la face avant du sac, au-dessus de l'ouverture 3. Le ou les panneaux solaires 15 sont préférentiellement fixés de façon amovible par exemple par des bandes Velcro®. La figure 5 montre un panneau fixé sur la face latérale du sac et un autre sur le dessus du sac. Les panneaux solaires 15 sont connectés et transfèrent leur énergie grâce aux prises jack USB 11 prévues. La figure 4 permet en outre de voir un écran 16 fixé préférentiellement de façon amovible sur l'ouverture mobile et amovible 3. L'écran 16 peut être un écran numérique apte à afficher diverses informations. On peut concevoir un affichage sous forme de signes ou flèches aptes à signaler un changement de direction du sac porté par un porteur en mouvement. Toute autre forme d'affichage dynamique peut bien entendu être prévue.

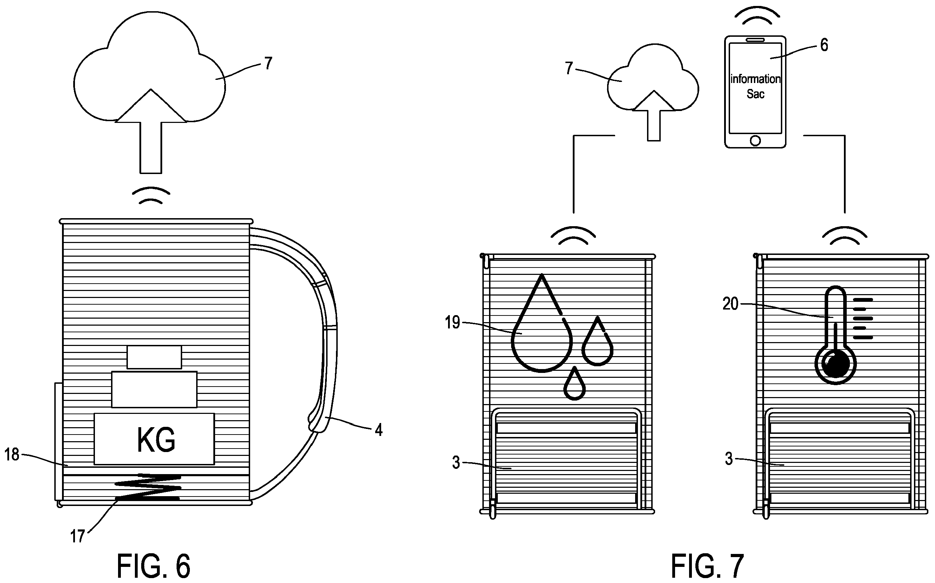

La figure 6 montre un sac connecté apte à transmettre des informations sur le poids du ou des objets transportés. Pour ce faire un capteur de poids 17 est monté en partie basse du sac ; le ou les objets sont supportés par une plaque 18. Le capteur 17 est relié et transmet en temps réel le poids de l'objet transporté, préférentiellement au cloud de l'entreprise. Cette information est intéressante car elle permet une traçabilité en temps réel du poids et donc de l'état d'avancement de la livraison.

La figure 7 décrit une autre caractéristique de l'invention: au moins un capteur d'hygrométrie 19 est fixé dans le volume interne du sac. Un capteur de température 20 peut être prévu dans ce même espace. Ce ou ces capteur(s) est (sont) relié(s) au cloud de l'entreprise 7 et/ou au smartphone 6 du porteur ; ceci permet de transmettre en temps réel des informations sur le volume où sont stockés le ou les objets à transporter. On comprend que pour des denrées périssables ou fragiles, ce type d'informations est capital. Non seulement on peut surveiller en temps réel que la température et/ou l'hygrométrie sont acceptables, mais si l'on mémorise ces données, on obtient une traçabilité apte à connaitre les conditions réelles et non discutables du transport.

Une autre caractéristique innovante de l'invention concerne la pose de caméra vidéo en au moins un endroit de la surface extérieure du sac : une caméra vidéo peut être fixée sur la face avant du sac et au moins une autre sur une face latérale. Ces caméras sont alimentées par la source d'énergie autonome 9 et elles permettent de transmettre en temps réel au cloud de l'entreprise des informations visuelles sur l'environnement du sac et/ou du porteur. Une sécurisation est ainsi réalisée. Dans le même ordre d'idées, une caméra associée à une LED peuvent être fixés sur ou à proximité de l'ouverture amovible 3 ou des autres ouvertures de même type ; leur mise en fonctionnement peut être déclenchée par le mouvement de l'ouverture amovible. On surveille ainsi tout déplacement de l'ouverture, ou des ouvertures. Ceci est utile encore une fois en temps réel pour contrôler les objets transportés, et ultérieurement pour tracer lesdits objets.

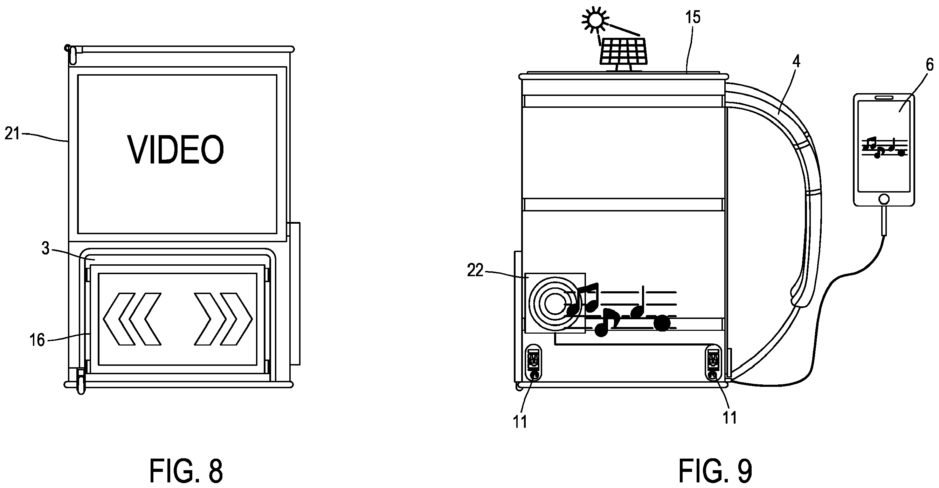

La figure 8 montre des caractéristiques additionnelles de l'invention: au moins un écran vidéo 21 peut être placé sur l'une des faces externes du sac connecté ; le ou les écrans sont alimentés par une source d'énergie interne 9 ou par au moins un panneau solaire 15, via au moins une prise jack USB 11 (non représentée sur la figure 8). Le ou les écrans vidéo 21 sont préférentiellement fixés de façon amovible sur la ou les faces externes du sac connecté. Les données vidéo sont transmises via la ou les prises jack USB. Bien entendu toutes sortes d'images peuvent être affichées, mais de préférence les vidéos affichées sont destinées à obtenir un suivi, une traçabilité et une sécurité des produits transportés et/ou du porteur.

La figure 9 illustre un mode de réalisation selon lequel des baffles ou moyens équivalents de diffusion audio 22 sont fixés - préférentiellement de façon amovible - sur l'une au moins des faces externes du sac connecté. La source d'énergie peut être constituée d'au moins un panneau solaire 15 lui-même fixé sur la face externe du sac et/ou de batterie rechargeable ou non. Les données audios sont alors transmises par la connexion d'un appareil de type smartphone 6, via une prise jack USB 11.

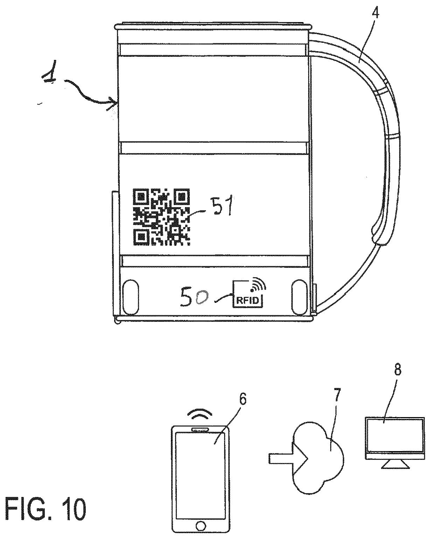

La figure 10 illustre un mode de réalisation du sac selon l'invention selon lequel le sac selon l'invention comporte une puce RFID 50 ainsi qu'un code de type QR 51 associé à la puce RFID 50. La puce RFID 50 est intégrée dans le sac selon l'invention au moment de sa fabrication. Par exemple, la puce RFID 50 est intégrée dans une épaisseur de l'enveloppe 1 du sac selon l'invention. Un code QR 51 associé à la puce RFID est apposé sur une surface externe de l'enveloppe 1 de manière à ce que le code QR 51 puisse être lu par un smartphone 6. Une telle intégration d'une puce RFID 50 et d'un code QR 51 associés permet de mettre en œuvre une traçabilité du sac selon l'invention et de son contenu entre le moment où le contenu est introduit dans le sac selon l'invention et le moment où le contenu, arrivé à destination, est sorti du sac selon l'invention. En effet, lors du remplissage du sac selon l'invention, un premier appairage est réalisé entre le sac selon l'invention et son contenu qui vient d'y être introduit par la lecture du code QR 51 associé à la puce RFID 50 : ainsi le contenu du sac selon l'invention est associé aux informations d'identification de la puce RFID 50. Ce premier appairage peut être réalisé via une application implantée sur un appareil de type smartphone 6. Ensuite un deuxième appairage est réalisé entre le sac selon l'invention rempli et un coursier désigné pour réaliser le transport du sac selon l'invention et son contenu à destination de livraison : pour cela, les informations d'identification de la puce RFID 50 sont associées à un compte du coursier via une application implantée sur un appareil de type smartphone 6 de ce dernier. L'ensemble des données contenant les informations des appairages précédents est transmis et/ou mémorisé à un 'cloud' donné 7, et ainsi fourni des informations en temps réel à un moyen de réception particulier 8 : par exemple un appareil de type smartphone 6 du destinataire du contenu du sac selon l'invention. Le destinataire peut alors vérifier la traçabilité du contenu du sac selon l'invention. Cela permet aussi de mettre en place un réel suivi du contenu entre le sac selon l'invention et le coursier en charge de son transport.

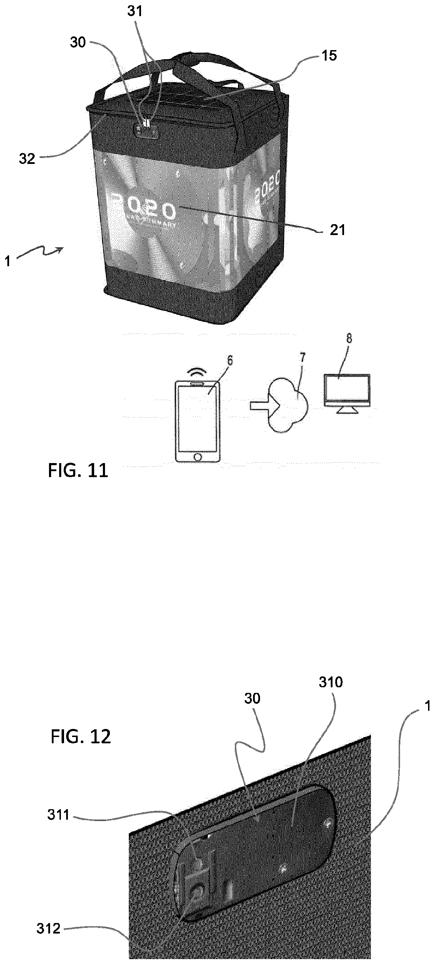

Les figures 11 à 14 illustrent un mode de réalisation du sac 1 selon l'invention selon lequel le sac 1 selon l'invention comporte un dispositif de sécurité 30 d'une configuration fermée du sac 1 selon l'invention, dispositif de sécurité 30 agencé de sorte à coopérer avec les moyens d'ouverture 3 du sac 1 selon l'invention. Un tel dispositif de sécurité 30 ne permet l'ouverture du sac 1 selon l'invention que par un utilisateur autorisé préenregistré dans ledit dispositif de sécurité 30. Cet utilisateur autorisé est principalement le porteur/propriétaire du sac 1 selon l'invention. Dans le mode de réalisation ici illustré, le sac 1 selon l'invention comporte un écran souple 21 s'étendant sur trois faces dudit sac 1 selon l'invention, ici de forme globalement parallélépipédique. D'autre part, le dispositif de sécurité 30 peut communiquer avec un appareil de type smartphone 6. En particulier, un appairage est ainsi réalisé entre le dispositif de sécurité 30 du sac 1 selon l'invention, rempli par exemple, et un coursier désigné pour réaliser le transport du sac 1 selon l'invention et son contenu depuis un lieu d'enlèvement à destination de livraison : pour cela, des informations d'identification du dispositif de sécurité 30 sont associées à un compte du coursier via une application implantée sur un appareil de type smartphone 6 de ce dernier. L'ensemble des données contenant les informations d'appairage est transmis et/ou mémorisé à un 'cloud' donné 7, et ainsi fourni des informations en temps réel à un moyen de réception particulier 8 : par exemple, comme précédemment, un appareil de type smartphone 6 du destinataire du contenu du sac 1 selon l'invention. Le destinataire peut alors vérifier la traçabilité du contenu du sac 1 selon l'invention. Cela permet aussi de mettre en place un réel suivi du contenu entre le sac 1 selon l'invention et le coursier associé lors de l'appairage susmentionné et en charge de son transport.

Ici, le sac 1 selon l'invention comporte, afin de permettre ou non un accès à son espace interne qu'il délimite par son enveloppe, et ce de manière connue en soi, une fermeture Eclair 32 comportant deux navettes 31 montées symétriques l'une par rapport à l'autre et comportant chacune une languette de manœuvre comprenant elle-même un œillet, le tout formant ici les moyens d'ouverture 3. Le dispositif de sécurité 30 est aménagé alors dans une épaisseur de l'enceinte du sac 1 selon l'invention au voisinage de la fermeture Eclair 32. Sur une face interne 310, le dispositif de sécurité 30 comporte un premier bouton 311 et un deuxième bouton 312. Le premier bouton 311 permet de réinitialiser des informations d'identification associées à la personne autorisée à utiliser le dispositif de sécurité 30. Le deuxième bouton 312 permet d'enregistrer au sein du dispositif de sécurité 30 des informations d'identification associées à la personne qui sera autorisée à utiliser le dispositif de sécurité 30. Cela permet de réaliser l'appairage entre le dispositif de sécurité 30 du sac 1 selon l'invention, rempli par exemple, et un coursier désigné pour réaliser le transport du sac 1 selon l'invention et son contenu, appairage qui peut ensuite être transmis à l'appareil de type smartphone 6 dudit coursier comme précédemment décrit.

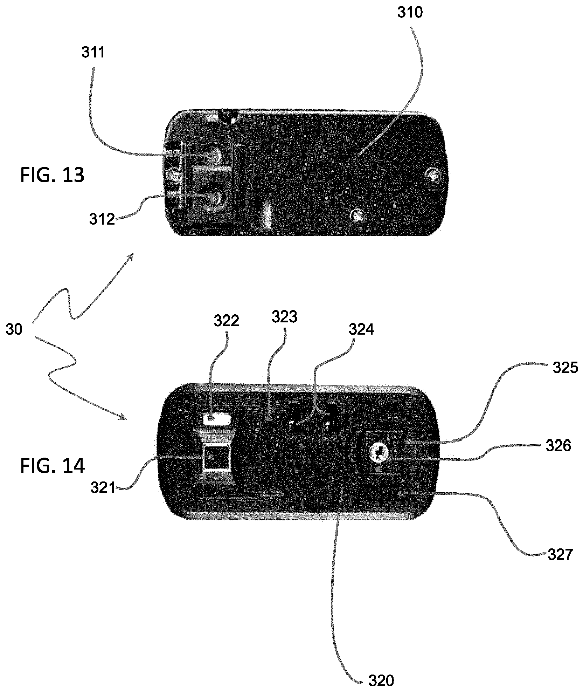

Sur une face externe 320 du dispositif de sécurité 30 du sac 1 selon l'invention, le dispositif de sécurité 30 comporte, ici, un lecteur 321 d'informations d'identification, par exemple un lecteur d'informations biométrique tel qu'un lecteur d'empreintes digitales de la personne autorisée ou à autoriser d'utiliser le sac 1 selon l'invention. Ce lecteur 321 est utilisé pour réaliser l'appairage avec ladite personne à autoriser ou pour déverrouiller une ouverture du sac 1 selon l'invention. D'autre part, le dispositif de sécurité 30 peut comporter un témoin de fonctionnement 322, ici sous la forme d'une LED. En outre, le dispositif de sécurité 30 comporte des moyens de retenue 323,324 des languettes des navettes 31 lorsque ces dernières sont en contact l'une de l'autre au droit du dispositif de sécurité 30, le sac 1 selon l'invention étant alors en configuration fermée. Les moyens de retenue comprennent ici des crochets 324 de retenue des languettes via leur œillet respectif et un couvercle 323 mobile entre une position de déverrouillage (illustrée en figure 14) permettant de libérer les languettes des navettes 31 des crochets 324, et une position de verrouillage où le couvercle 323 recouvre les crochets 324, bloquant en place les languettes des navettes 31 en prise avec les crochets 324. Le passage d'une position à l'autre, et en particulier celui de la position de verrouillage à la position de déverrouillage est réalisé par une pression sur un déclencheur 325 aménagé à cet effet sur la face externe 320 du dispositif de sécurité 30. Toutefois, dans ce cas, le déclencheur 325 n'est actif que si les informations d'identification relevées, de manière concomitante ou juste avant, par le lecteur 321 correspondent à celles de la personne autorisée préalablement enregistrées dans le dispositif de sécurité 30. Un système de sauvegarde 326, mécanique telle une serrure à clef, est prévu en cas de défaillance ou de panne du dispositif de sécurité 30.

En variante, le dispositif de sécurité 30 comporte une prise de type USB pour connecter filairement un appareil de type smartphone 6.

Sans sortir de l'invention il est possible de prévoir une caméra vidéo fixée sur une bretelle 4 du sac, coopérant fonctionnellement avec une source lumineuse de type LED fixée par exemple sur une autre bretelle 4. Le porteur peut ainsi être vu, filmé pendant son intervention à des fins de sécurisation et/ou de traçabilité à la fois pour lui-même et pour les objets, produits fragiles qu'il transporte.

Des moyens pour chauffer et/ou refroidir le volume intérieur du sac sont favorablement prévus ; des résistances chauffantes, ou autres éléments aptes à chauffer sont choisies et fixées par exemple à l'enveloppe rigide ou semi rigide. De même pour des éléments réfrigérants. Un contrôle de la température peut être prévu afin de réguler la température dans le volume interne.

Les personnes ou catégories de personnes susceptibles d'utiliser le sac connecté selon l'invention sont nombreuses et variées : coursiers alimentaires, secouristes, personnel médical, pompiers, personnel du transport aérien, vétérinaire, personnel des armées, randonneurs, grimpeurs, voyageurs. On peut aussi citer le transport d'instruments de musique, d'équipements de sport. L'invention trouve un intérêt dès qu'il s'agit de transporter dans des conditions spécifiques des objets ou produits qualifiés de 'fragiles'. En outre l'invention permet une localisation, un contrôle et un suivi à distance des objets transportés ainsi que du porteur lui-même si souhaité.

Bien entendu, les différents modes de réalisation précédemment décrits du sac 1 selon l'invention peuvent être combinés entre eux de sorte à augmenter une synergie entre eux pour réaliser le but de l'invention de fournir un suivi, une traçabilité et une sécurité des produits transportés et/ou du porteur.

## Revendications

1. Sac connecté de transport d'objets fragiles comprenant une enveloppe externe (1) rigide ou semi-rigide délimitant un volume interne, des éléments de cloisonnement (2) dudit volume interne, des moyens d'ouverture (3) de l'enveloppe pour l'accès au volume interne, des moyens de liaison (4) avec un porteur, **caractérisé en ce qu'**il comporte un dispositif de sécurité (30), agencé de sorte à coopérer avec les moyens d'ouverture (3), comprenant un lecteur (321) d'informations d'identification d'une personne autorisée à ouvrir le sac.

2. Sac de transport selon la revendication 1, **caractérisé en ce qu'**il comprend en outre une puce RFID (50) intégrée.

3. Sac de transport selon la revendication 2, **caractérisé en ce qu'**il comporte en outre un code QR (51) associé à la puce RFID.

4. Sac de transport selon la revendication 1 ou 2 ou 3, **caractérisé en ce qu'**il comprend en outre des moyens de liaison connectique (5, 11) aptes à localiser ledit sac et/ou ledit porteur et /ou à délivrer en temps réel des informations sur les objets transportés, une source d'énergie autonome (9, 15) de type batterie reliée à au moins une prise de type jack-USB (11).

5. Sac de transport selon la revendication 1 **caractérisé en ce qu'**il comprend en outre des moyens de sécurisation du porteur tels que des sources lumineuses, des airbags (12).

6. Sac de transport selon l'une des revendications précédentes **caractérisé en ce que** les informations sur les objets transportés concernent leur poids issu d'au moins un capteur de poids (17) intégré et/ou leur température issues d'au moins un capteur de température (20) et/ou l'hygrométrie issues d'au moins un capteur d'humidité (19) du volume intérieur du sac, les capteurs étant reliés fonctionnellement à un moyen de traitement extérieur (6, 7) au sac et/ou à une carte magnétique.

7. Sac de transport selon l'une des revendications précédentes **caractérisé en ce qu'**il comprend en outre des moyens pour chauffer ou refroidir ledit volume interne, alimentés par la source d'énergie (9, 15).

8. Sac de transport selon l'une des revendications précédentes **caractérisé en ce qu'**il comprend en outre des moyens d'affichage (16, 21) fixés sur la surface extérieure de l'enveloppe, alimentés ou non par la source d'énergie.

9. Sac de transport selon l'une des revendications précédentes **caractérisé en ce qu'**il comprend en outre des moyens de diffusion du son (22) alimentés par la source d'énergie et aptes à coopérer avec des fichiers numériques transmis depuis au moins une source extérieure (6).

10. Sac de transport selon l'une des revendications précédentes **caractérisé en ce qu'**il comprend en outre au moins une caméra et au moins une LED coopérant avec le moyen d'ouverture (3) de l'enveloppe et des moyens de connectique afin de contrôler et/ou d'enregistrer les déplacements dudit moyen d'ouverture.

11. Sac de transport selon l'une des revendications précédentes **caractérisé en ce qu'**il comprend en outre au moins une caméra fixée sur l'enveloppe extérieure, alimentée par ladite source d'énergie et apte à enregistrer et/ou transmettre des informations relatives à l'environnement dudit sac en temps réel.

12. Sac de transport selon la revendication 1, **caractérisé en ce que** le lecteur (321) est un lecteur d'informations biométrique.

13. Sac de transport selon la revendication 12, **caractérisé en ce que** le lecteur (321) est un lecteur d'empreintes digitales.
